# EUROPEAN PATENT APPLICATION

(11) **EP 4 518 013 A1**
(43) Date of publication of application: **05.03.2025**
(21) Application number: 23850197.7
(22) Date of filing: 13.04.2023
(51) Int. Cl.: H01M 50/574, H01M 50/533, H01M 50/211, H01M 50/172

(54) **SECONDARY BATTERY, AND BATTERY MODULE AND DEVICE COMPRISING SAME**

(30) Priority: 04.08.2022 KR 20220097043
(71) Applicant: SK On Co., Ltd., Seoul 03161 (KR)
(72) Inventor: HWANG, Ho Jin, Daejeon 34124 (KR); KIM, Young Ha, Daejeon 34124 (KR); KIM, Ji Hyung, Daejeon 34124 (KR); LEE, Sang Bin, Daejeon 34124 (KR)
(74) Representative: Prüfer & Partner mbB Patentanwälte · Rechtsanwälte
(86) International application number: PCT/KR2023/005040
(87) International publication number: WO 2024/029684

(57) **Abstract**

The present invention provides a secondary battery comprising: an electrode assembly; an electrode current collector extending from the electrode assembly; an electrode tab electrically connected to the electrode current collector; and a current blocking member between the electrode current collector and the electrode tab, in order to improve the lifespan and stability of the secondary battery by blocking a current in an abnormal operation state of the secondary battery. The current blocking member includes a first member connected to the electrode current collector and including a PTC element and a second member connected to the electrode tab. The first member includes a structure separated from the electrode current collector by protruding upward in a direction of the electrode tab at a predetermined current value or more.

## Description

### [Technical Field]

The present invention relates to a secondary battery including a current blocking member disposed between an electrode current collector and an electrode tab and protruding upward in the direction of the electrode tab and separated from the electrode current collector in an abnormal operation state, and a battery module and a device including the same.

### [Background Art]

The electric vehicle market requires the production of batteries that can allow for long-distance driving on a single charge. In order to increase the driving range of electric vehicles, the energy density of the batteries needs to be high. Lithium secondary batteries, which exhibit high energy density, are used as the most suitable batteries for electric vehicles.

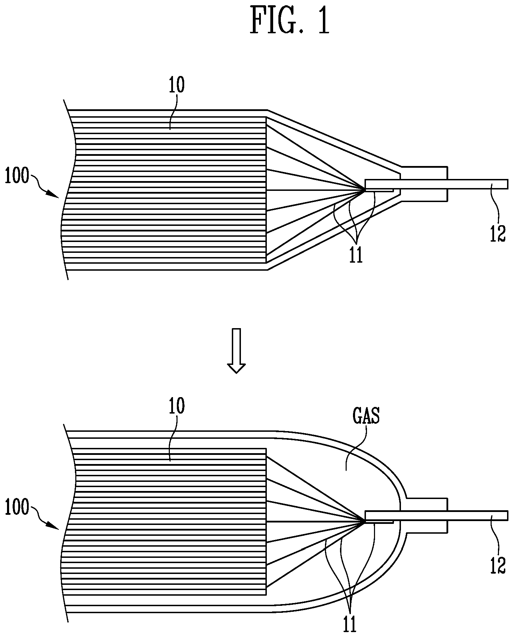

In general, a lithium secondary battery may be manufactured by accommodating in an exterior material an electrode assembly including electrodes where an electrical reaction occurs. FIG. 1 schematically illustrates a part of a cross-section of a conventional secondary battery in which an electrode assembly is accommodated in an exterior material. Referring to FIG. 1, a secondary battery 100 includes an electrode assembly 10 accommodated in an exterior material, an electrode current collector 11 extending from the electrode assembly 10, and an electrode tab 12 electrically connected to the electrode current collector 11. In a normal operation state of the secondary battery 100, there is no problem of generating a gas therein, but in an abnormal operation state of the secondary battery 100, there was a problem that the internal temperature of the secondary battery 100 rapidly increased due to an overcurrent, the electrolyte solution was decomposed, and the separator shrank. In addition, dendrites were generated due to the lithium plating phenomenon, which reduces the amount of lithium ions and increases the risk of short circuits, resulting in problems such as reduced lifetime and stability of the secondary battery. In particular, a gas was continuously generated inside the secondary battery 100 due to heat generation, resulting in problems such as the ignition or explosion of the secondary battery 100.

In this way, a technology that can prevent secondary batteries from ignition and explosion in an abnormal operation state and thus improve the lifetime and stability of secondary batteries is required.

### [Disclosure]

### [Technical Problem]

The present invention provides to a secondary battery including a current blocking member disposed between an electrode current collector and an electrode tab and protruding upward in the direction of the electrode tab and separated from the electrode current collector in an abnormal operation state, in order to improve the lifetime and stability of secondary batteries.

### [Technical Solution]

A secondary battery according to the present invention includes: an electrode assembly; an electrode current collector extending from the electrode assembly; an electrode tab electrically connected to the electrode current collector; and a current blocking member disposed between the electrode current collector and the electrode tab; wherein the current blocking member is connected to the electrode current collector and includes a first member including a positive temperature coefficient (PTC) element and a second member connected to the electrode tab, wherein the first member includes a structure that protrudes upward in the direction of the electrode tab at a predetermined current value or higher and is separated from the electrode current collector.

According to one embodiment, the current blocking member may include a third member connected to the first member and the second member.

According to one embodiment, the current blocking member may include a first fastening portion connecting the first member and the third member and a second fastening portion connecting the second member and the third member.

According to one embodiment, the first member, the second member, and the third member may include a trapezoidal cross-section having upper and lower bases of different lengths.

According to one embodiment, the first member, the second member, and the third member may include a trapezoidal cross-section where the length of the lower base is longer than the length of the upper base.

According to one embodiment, the first fastening portion may connect the lower base of the first member and the lower base of the third member.

According to one embodiment, the second fastening portion may connect the lower base of the second member and the lower base of the third member.

According to one embodiment, the connection between the first member and the third member may be maintained by the first fastening portion when the first member is separated from the electrode collector.

According to one embodiment, the connection between the second member and the third member may be maintained by the second fastening portion when the first member is separated from the electrode collector.

According to one embodiment, a gap may be formed between the electrode tab and the electrode current collector when the first member is separated from the electrode current collector.

According to one embodiment, the first member may be separated from the electrode current collector when the internal temperature of the secondary battery is 80 °C or higher.

According to one embodiment, the PTC element may include a thermoplastic resin.

According to one embodiment, the PTC element may further include a carbon-based material and a ceramic material.

According to one embodiment, the secondary battery may include an exterior material accommodating the electrode assembly and the electrode current collector, and the electrode tab may be pulled out from the exterior material.

A battery module according to the present invention includes the secondary battery of the present invention.

A device according to the present invention includes the battery module of the present invention as a power source.

### [Advantageous Effects]

The secondary battery according to the present invention includes a current blocking member that blocks a current in an abnormal operation state, and thus has the effect of improving the lifetime and stability of the secondary battery.

In addition, the current blocking member according to the present invention has a structure that protrudes downward in the direction of an electrode current collector in a normal operating state of the secondary battery, but has a flexible structure that protrudes upward in the direction of an electrode tab and is separated from the electrode current collector in an abnormal operation state of the secondary battery, thereby effectively inducing a short circuit between the electrode current collector and the electrode tab, and a gap is formed between the electrode current collector and the electrode tab, and thus the present invention has the effect of preventing the possibility of current conduction between the electrode current collector and the electrode tab.

In addition, the current blocking member according to the present invention forms a gap between the electrode current collector and the electrode tab in an abnormal operation state of the secondary battery, thereby effectively inducing venting of a gas generated inside the secondary battery, and thus has the effect of improving the lifetime and stability of the secondary battery.

In addition, the current blocking member according to the present invention has a structure that may be applied without modifying the fastening structure of secondary battery materials such as conventional electrode assemblies and electrode tabs, and thus has the effect that modification of an exterior material accommodating secondary batteries or insertion of a separate support structure is not required.

In addition, the current blocking member according to the present invention has a structure that can be applied without modifying the fastening structure of secondary battery materials such as conventional electrode assemblies and electrode tabs, so that even when the current blocking member is included in the secondary battery, the same appearance as that of a conventional mass-produced secondary battery can be maintained, and there is no change in the assembly method of battery modules, packs, devices, and the like, so that there is an effect that secondary batteries can be manufactured efficiently and economically.

### [Description of Drawings]

FIG. 1 schematically illustrates a part of a cross-section of a secondary battery accommodating a conventional electrode assembly in an exterior material.
FIG. 2 schematically illustrates a secondary battery structure including a current blocking member according to one embodiment of the present invention.
FIG. 3 schematically illustrates a current blocking member structure that protrudes upward in the direction of an electrode tab when an overcurrent occurs, thereby inducing a short circuit between an electrode current collector and an electrode tab.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification or application. In addition, the technical principle of the present invention is not construed as being limited to the embodiments described in the present specification or application.

Hereinafter, the present invention will be described in detail.

A secondary battery according to the present invention includes: an electrode assembly; an electrode current collector extending from the electrode assembly; an electrode tab electrically connected to the electrode current collector; and a current blocking member disposed between the electrode current collector and the electrode tab; wherein the current blocking member is connected to the electrode current collector and includes a first member including a positive temperature coefficient (PTC) element and a second member connected to the electrode tab, wherein the first member includes a structure that protrudes upward in the direction of the electrode tab at a predetermined current value or higher and is separated from the electrode current collector

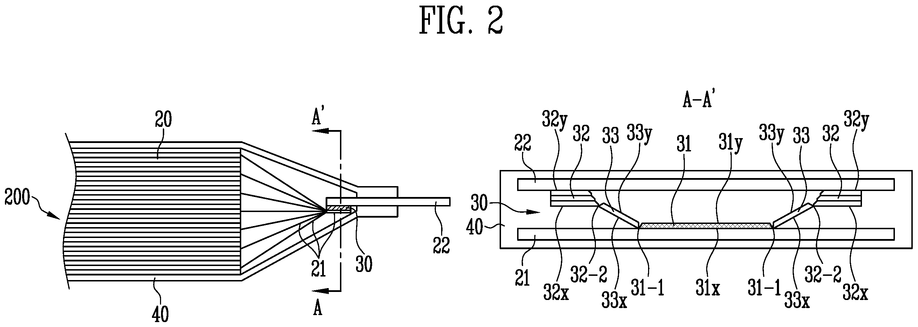

FIG. 2 schematically illustrates a secondary battery structure including a current blocking member according to one embodiment of the present invention. Referring to FIG. 2, the secondary battery 200 includes an electrode assembly 20, an electrode current collector 21 extending from the electrode assembly, an electrode tab 22 electrically connected to the electrode current collector 21, and a current blocking member 30 disposed between the electrode current collector 21 and the electrode tab 22.

An electrode assembly 20 may include a structure in which a cathode, an anode, and a separator interposed between the cathode and the anode are stacked. A cathode may include a cathode active material which lithium (Li) ions may be inserted to and extracted from, and an anode may include an anode active material which lithium (Li) ions may be absorbed to and extracted from. In addition, a cathode and an anode may further include a binder and a conductive material in each of a cathode active material and an anode active material to improve mechanical stability and electrical conductivity. A separator may be configured to prevent electrical short-circuit between a cathode and an anode and to generate a flow of ions. The type of the separator is not particularly limited, but may include a porous polymer film. An electrode assembly 20 may be manufactured by alternately stacking a plurality of cathodes and anodes and interposing separators between the cathodes and anodes, by a stacking or zigzag stacking method.

An electrode current collector 21 is a plurality of cathode current collectors and a plurality of anode current collectors extending from a plurality of cathodes and a plurality of anodes, respectively, and the plurality of cathode current collectors and the plurality of anode current collectors may be stacked and combined, respectively. The plurality of cathode current collectors and the plurality of anode current collectors extending from the plurality of cathodes and the plurality of anodes may extend in the same direction from the electrode assembly 20, or may extend in different directions, respectively. A cathode electrode current collector is not particularly limited as long as it has high conductivity without causing chemical changes in a cathode. For example, stainless steel, aluminum, nickel, titanium, calcined carbon, or the like may be used. In addition, fine irregularities may be formed on the surface of a cathode current collector to increase the bonding power of a cathode active material, and it may be manufactured in various forms such as films, sheets, foils, nets, porous materials, foams, and non-woven fabrics. An anode electrode current collector is not particularly limited as long as it has high conductivity without causing chemical changes in an anode. For example, copper, stainless steel, aluminum-cadmium alloy, or the like may be used. In addition, like a cathode current collector, fine irregularities may be formed on the surface of an anode current collector, and it may be manufactured in various forms such as films, sheets, foils, nets, porous materials, foams, and non-woven fabrics.

An electrode tab 22 is electrically connected to an electrode current collector 21. An electrode tab 22 may extend to the outside of an exterior material 40 that accommodating an electrode assembly 20 and may become an electrode terminal. For example, an electrode tab electrically connected to a plurality of cathode current collectors may become a cathode terminal, and an electrode tab electrically connected to a plurality of anode current collectors may become an anode terminal. Although FIG. 2 illustrates a structure in which an electrode tab 22 is positioned on the upper portion of an electrode current collector 21, a structure in which an electrode tab (22) is positioned on the lower portion of an electrode current collector 21 is also possible.

A current blocking member 30 is disposed between an electrode current collector 21 and an electrode tab 22. A current blocking member 30 is connected to an electrode current collector 21 and includes a first member 31 including a PTC element and a second member 32 connected to an electrode tab 22.

A PTC element includes a PTC material having a characteristic that the resistance value drastically increases as the temperature rises when an overcurrent occurs. A first member 31 includes a PTC element and thus is capable of blocking a current between an electrode current collector 21 and an electrode tab 22 when an overcurrent occurs, thereby preventing ignition and explosion of a secondary battery due to the overcurrent.

A PTC element may include a polymer resin that functions as an electrically insulating material, for example, a PTC element may include a thermoplastic resin. The type of thermoplastic resin may be one or more selected from the group consisting of high-density polyethylene, linear low-density polyethylene, low-density polyethylene, medium-density polyethylene, maleic anhydride functionalized polyethylene, maleic anhydride functionalized elastomeric ethylene copolymer, ethylene-butene copolymer, ethylene-octene copolymer, ethylene-acrylate copolymers such as ethylene-methyl acrylate, ethylene-ethyl acrylate, and ethylene butyl acrylate copolymer, polyethylene including glycidyl methacrylate modified polyethylene, polypropylene, maleic anhydride functionalized polypropylene, glycidyl methacrylate modified polypropylene, polyvinyl chloride, polyvinyl acetate, polyvinyl acetyl, acrylic resin, and alternating polystyrene.

In addition, a PTC element may further include a conductive filler such as a carbon-based material and a ceramic material. As a type of ceramic material, BaTiO₃ may be used, and a mixture of Y₂O₃ and Nb₂O₅ with BaTiO₃ may be used.

A current blocking member 30 may include a third member 33 connected to a first member 31 and a second member 32. In addition, a current blocking member 30 may include a first fastening portion 31-1 connecting a first member 31 and a third member 33 and a second fastening portion 32-2 connecting a second member 32 and a third member 33. A current blocking member 30 may secure the fluidity of a first member 31 and a third member 33 between an electrode current collector 21 and an electrode tab 22 by a first fastening portion 31-1 and a second fastening portion 32-2. Due to this, the first member may protrude upward in the direction of the electrode tab and be separated from the electrode current collector, and the current blocking member may be applied without modifying the fastening structure of secondary battery materials such as the electrode assemblies and the electrode tabs or inserting a separate support structure, and thus there is the effect that the same appearance as that of a conventional mass-produced secondary battery can be maintained.

The first member 31, the second member 32, and the third member 33 may include a trapezoidal cross-section having an upper base 31y, 32y, and 33y and a lower side 31x, 32x, and 33x of different lengths. In addition, the first member 31, the second member 32, and the third member 33 may include a trapezoidal cross-section where the length of the lower base 31x, 32x, and 33x is longer than the length of the upper base 31y, 32y, and 33y. Preferably, a first fastening portion 31-1 may connect the lower base 31x of the first member and the lower base 33x of the third member, and a second fastening portion 32-2 may connect the lower base 32x of the second member and the lower base 33x of the third member. The first member, the second member, and the third member include a trapezoidal cross-section and has a structure in which they are connected to each other with the longer lower bases of the trapezoidal shape, so that when the first member is separated from the electrode collector, a directionality that allows the first member to protrude upward toward the electrode tab may be given, and a short circuit between the electrode collector and the electrode tab may be effectively induced, thereby having the effect of preventing the possibility of current conduction between the electrode collector and the electrode tab.

The first member has a structure that protrudes upward in the direction of the electrode tab at a predetermined current value or higher and is separated from the electrode current collector. Here, the predetermined current value means a critical value at which the resistance value increases as the current increases and the current is blocked by a PTC element.

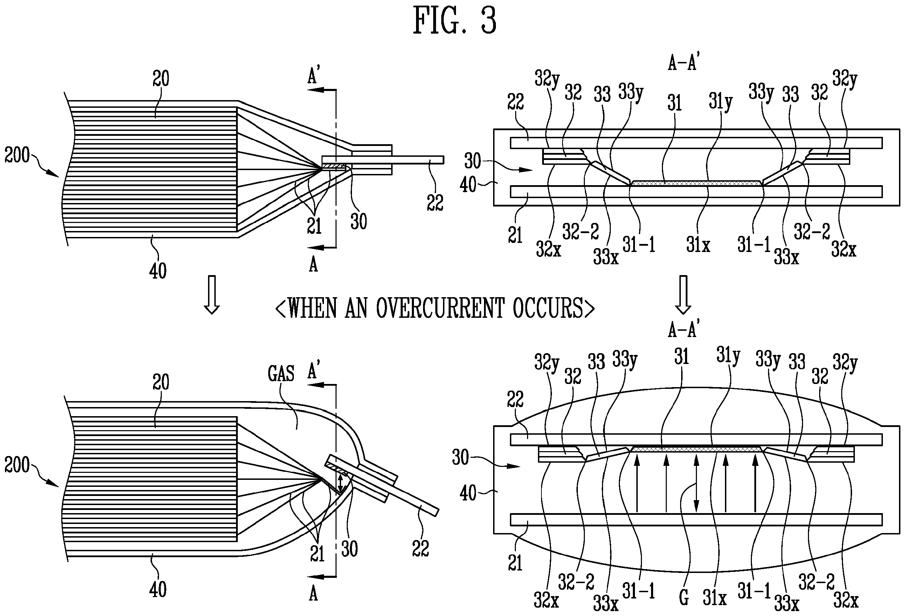

FIG. 3 schematically illustrates a current blocking member structure that protrudes upward in the direction of an electrode tab when an overcurrent occurs, thereby inducing a short circuit between an electrode current collector and an electrode tab.

Referring to FIG. 3, in a normal operation state of a secondary battery 200, a first member 31 protrudes downward in the direction of an electrode current collector 21. However, when an abnormal overcurrent occurs in the secondary battery 200, the resistance of the PTC element included in the first member 31 increases, and due to the increased resistance, the temperature and pressure inside the secondary battery 200 increase, so that the first member 31 protrudes upward in the direction of the electrode tab 22 and is separated from the electrode current collector 21.

In addition, when the first member 31 is separated from the electrode current collector 21, the connection between the first member 31 and the third member 33 may be maintained by the first fastening portion 31-1, and the connection between the second member 32 and the third member 33 may be maintained by the second fastening portion 32-2. As a result, when the first member 31 is separated from the electrode current collector 21, a gap G may be formed between the electrode tab 22 and the electrode current collector 21, and venting of a gas generated inside the secondary battery may be effectively induced, thereby having the effect of improving the lifetime and stability of the secondary battery.

The first member 31 has a structure that protrudes upward in the direction of the electrode tab 22 at a predetermined current value or higher and is separated from the electrode current collector 21, and the first member 31 may be separated from the electrode current collector 21 when the internal temperature of the secondary battery 200 is 80 °C or higher. The first member 31 includes a PTC element, and the PTC element includes a PTC material having a characteristic that the resistance value drastically increases as the temperature rises when an overcurrent occurs. Therefore, when the internal temperature of the secondary battery 200 is 80 °C or higher, the characteristic of the PTC material is exhibited and the resistance drastically increases, so that the PTC element may function as a fuse that blocks the current.

The secondary battery 200 includes an exterior material 40 accommodating an electrode assembly 20 and an electrode current collector 21, and an electrode tab 22 may be pulled out from the exterior material 40. An exterior material 40 serves to protect an electrode assembly 20 from an external environment. An exterior material 40 may include a water-resistant resin, and may be in the form of, for example, a film in which a polyolefin-based resin, a metal, a nylon resin, and a polyterephthalate resin are laminated. The current blocking member according to the present invention may be applied without modifying the fastening structure of secondary battery materials such as electrode assemblies and electrode tabs or inserting a separate support structure, so that it can be applied even in a form identical to the appearance of a conventional secondary battery in which the electrode tab is pulled out from an exterior material, and there is an effect that modification of an exterior material accommodating secondary batteries is not required.

A battery module according to the present invention includes the secondary battery of the present invention. More specifically, the battery module according to the present invention may include the secondary battery of the present invention as a unit cell. In addition, a device according to the present invention includes the battery module of the present invention as a power source. The current blocking member of the present invention has a structure that can be applied without modifying the fastening structure of secondary battery materials such as conventional electrode assemblies and electrode tabs, so that even when the current blocking member is included in the secondary battery, the same appearance as that of a conventional mass-produced secondary battery can be maintained, and there is no change in the assembly method of the battery module and the device, so there is an effect that battery modules and the devices can be manufactured efficiently and economically.

### [Reference Numerals]

10, 20: Electrode assembly
11, 21: Electrode current collector
12, 22: Electrode tab
30: Current blocking member
31: First member
32: Second member
33: Third member
40: Exterior material
100, 200: Secondary battery

## Claims

1. A secondary battery comprising:
an electrode assembly;
an electrode current collector extending from the electrode assembly;
an electrode tab electrically connected to the electrode current collector; and
a current blocking member disposed between the electrode current collector and the electrode tab;
wherein the current blocking member is connected to the electrode current collector and includes a first member including a positive temperature coefficient (PTC) element and a second member connected to the electrode tab,
wherein the first member includes a structure that protrudes upward in the direction of the electrode tab at a predetermined current value or higher and is separated from the electrode current collector.

2. The secondary battery according to claim 1, wherein the current blocking member includes a third member connected to the first member and the second member.

3. The secondary battery according to claim 2, wherein the current blocking member includes a first fastening portion connecting the first member and the third member and a second fastening portion connecting the second member and the third member.

4. The secondary battery according to claim 2, wherein the first member, the second member, and the third member include a trapezoidal cross-section having upper and lower bases of different lengths.

5. The secondary battery according to claim 4, wherein the first member, the second member, and the third member include a trapezoidal cross-section where the length of the lower base is longer than the length of the upper base.

6. The secondary battery according to claim 5, wherein the first fastening portion connects the lower base of the first member and the lower base of the third member.

7. The secondary battery according to claim 5, wherein the second fastening portion connects the lower base of the second member and the lower base of the third member.

8. The secondary battery according to claim 3, wherein the connection between the first member and the third member is maintained by the first fastening portion when the first member is separated from the electrode collector.

9. The secondary battery according to claim 3, wherein the connection between the second member and the third member is maintained by the second fastening portion when the first member is separated from the electrode collector.

10. The secondary battery according to claim 1, wherein a gap is formed between the electrode tab and the electrode current collector when the first member is separated from the electrode current collector.

11. The secondary battery according to claim 1, wherein the first member is separated from the electrode current collector when the internal temperature of the secondary battery is 80 °C or higher.

12. The secondary battery according to claim 1, wherein the PTC element includes a thermoplastic resin.

13. The secondary battery according to claim 12, wherein the PTC element further includes a carbon-based material and a ceramic material.

14. The secondary battery according to claim 1, wherein the secondary battery includes an exterior material accommodating the electrode assembly and the electrode current collector, and the electrode tab is pulled out from the exterior material.

15. A battery module including the secondary battery according to claim 1.

16. A device including the battery module according to claim 15 as a power source.
